# EUROPÄISCHE PATENTANMELDUNG

(11) **EP 2 491 803 A1**
(43) Veröffentlichungstag der Anmeldung: **29.08.2012**
(21) Anmeldenummer: 12156598.0
(22) Anmeldetag: 22.02.2012
(51) Int. Cl.: A41H 3/00, G06F 17/50

(54) **Verfahren zur Erstellung eines Bekleidungsschnitts**

(30) Priorität: 22.02.2011 DE 102011012267
(71) Anmelder: Ehrich, Ludmila, 07751 Rothenstein (DE)
(72) Erfinder: Ehrich, Ludmila, 07751 Rothenstein (DE)
(74) Vertreter: Oehmke, Volker

(57) **Zusammenfassung**

Die Erfindung betrifft ein Verfahren zur Erstellung eines Bekleidungsschnitts und umfasst die Schritte: a. Erstellen einer virtuellen dreidimensionalen Abbildung der Körperhälften (1.1) mindestens eines Abschnittes (1.2, 1.3) eines Körpers (1) einer Person, b. Erzeugen von virtuellen Koordinaten zur Simulation eines Kleidungsstücks und c. Zuordnen von relativen Maßen des simulierten Kleidungsstücks zu einer zweidimensionalen Darstellung. Das erfindungsgemäße Verfahren ist dadurch gekennzeichnet, dass eine virtuelle dreidimensionale Abbildung einer realen Person erstellt wird, das Vorliegen einer Symmetrie der Körperhälften bezüglich einer Symmetrieachse (2) geprüft wird, dass ein an die Abbildung angepasstes Element (3) abgewickelt wird und dass das Element (3) in dem Bekleidungsschnitt gezielt verändert werden kann.

## Beschreibung

Die Erfindung betrifft ein Verfahren zur Erstellung eines Bekleidungsschnitts zur Anfertigung von Kleidungsstücken, wie dies gattungsgemäß aus der Schrift DE 601 00 628 T2 (WO 01/086512) bekannt ist.

Die Massenanfertigung von Kleidungsstücken erfolgt zumeist in standardisierten Kleidergrößen. Diese sind oft nachträglich an die individuellen Wünsche und körperlichen Gegebenheiten der Kunden anzupassen und abzuändern.

Werden dagegen Kleidungsstücke direkt und individuell auf die Körperform und Körperhaltung eines Kunden zugeschnitten, waren in der Vergangenheit eine Anprobe und ein Ermitteln der individuellen Maße direkt am Kunden erforderlich. Nach erfolgten Änderungen an den Kleidungsstücken war unter Umständen mindestens eine erneute zeit- und arbeitsintensive Anprobe notwendig.

Mit der Einführung des 3-D-Body-Scanners Ende der 1990' wurde versucht, individuelle Maßbekleidung industriell herzustellen. Die Körperform des jeweiligen Kunden wird mittels eines Lichtstrahls abgetastet (gescannt) und als virtuelle dreidimensionale Abbildung gespeichert. Mittels eines entsprechenden Programms (Konstruktionssoftware) werden die individuellen Körpermaße des Kunden automatisch ermittelt und zur Generierung eines bereits vorkonstruierten und gespeicherten Standardschnittmusters eines CAD-Systems weitergeleitet.

Ein solches Verfahren zum Entwerfen von Kleidungsstücken ist durch die DE 601 00 628 T2 offenbart. Es wurde versucht, die individuellen Besonderheiten eines Körpers in die Konstruktion eines Schnittmusters einfließen zu lassen. Dabei wird mindestens ein Teil eines Körpers eines virtuellen Mannequins drei-dimensional dargestellt und ein Netzwerk von Linien und Schnittebenen konstruiert, dessen Schnittpunkte jeweils einen vorgegebenen Abstand zur Oberfläche des dargestellten Körpers besitzen. Auf diese Weise ist es möglich, eine Struktur oder Schale zu erhalten, die in ihrem Volumen und in ihren Linien dem zu entwerfenden Kleidungsstück entsprechen. Das entworfene Kleidungsstück kann per Augenschein **auf** Richtigkeit überprüft und gegebenenfalls korrigiert werden. Die Konstruktionskoordinaten werden in ein CAD-System zur Herstellung eines Schnittmusters übertragen. Durch die Modifikation von bestimmten Parametern des virtuellen Mannequins ist es ermöglicht, unterschiedliche Körperformen und Körperhaltungen zu simulieren.

Anhand von Körpermerkmalen, wie der Position des Bauchnabels oder der Taille, werden vertikale und horizontale Schnittebenen sowie Referenzschnittebenen festgelegt, von denen ausgehend weitere Schnittebenen und Maße der Elemente abgeleitet werden. Unter Berücksichtigung tabellierter morphologischer Merkmale verschiedener Bevölkerungsgruppen, für welche die Kleidungsstücke hergestellt werden sollen, können die Schnittebenen und die Maße der Elemente sowie deren Beziehungen zueinander auf die jeweilige Bevölkerungsgruppe abgestimmt werden.

Nachteilig an den bislang bekannten Verfahren ist, dass als Grundlage für die Erstellung des Schnittmusters ein Standardkörper mit einer vorgegebenen Körperhaltung und Körperform verwendet wird. Mittels verschiedener mathematischer Formeln werden die Maße für das Schnittmuster ausgehend von dem Standardkörper ermittelt. Für eine Mehrzahl der Menschen lässt sich jedoch wegen ihrer individuellen Körperhaltung und Körperform mit dem genannten Vorgehen eine Kleidung nicht in zufriedenstellender Passqualität erstellen.

Der Erfindung liegt die Aufgabe zugrunde, eine verbesserte Möglichkeit zur individuellen Erstellung eines Bekleidungsschnitts vorzuschlagen.

Die Aufgabe wird durch ein Verfahren zur Erstellung eines Bekleidungsschnitts gelöst, das die Schritte:
a. Erstellen einer virtuellen dreidimensionalen Abbildung der Körperhälften mindestens eines Abschnittes eines Körpers einer Person;
b. Erzeugen von virtuellen Koordinaten zur Simulation eines Kleidungsstücks ausgehend von der Abbildung;
c. Zuordnen von relativen Maßen des simulierten Kleidungsstücks zu einer zweidimensionalen Darstellung, umfasst.

Das erfindungsgemäße Verfahren ist dadurch gekennzeichnet, dass in Schritt a. eine virtuelle dreidimensionale Abbildung der Körperhälften einer realen Person erstellt wird, um für diese reale Person einen individuellen Bekleidungsschnitt zu erstellen. Nach dem Schritt a. wird (in einem Schritt a.a) eine Symmetrieachse der abgebildeten Körperhälften festgelegt und anschließend (in einem Schritt a.b) überprüft, ob eine Symmetrie der abgebildeten Körperhälften bezüglich der Symmetrieachse vorliegt. In Schritt b. wird mittels der virtuellen Koordinaten mindestens ein virtuelles Element eines Kleidungsstücks erzeugt. Dieses Element wird an einen Bereich der Abbildung angepasst. Um einen zweidimensionalen Bekleidungsschnitt zu generieren, wird das Element abgewickelt. Das Element kann in dem Bekleidungsschnitt gezielt verändert werden.

Unter relativen Maßen werden die proportionalen Verhältnisse, beispielsweise von Längen und Breiten, des Kleidungsstücks oder seiner Teileinheiten (Elemente) verstanden. Es kommt dabei während der konstruktiven Erstellung des Bekleidungsschnitts nicht auf reale Maße, sondern lediglich auf deren relativen Verhältnisse zueinander an.

Zur Erstellung einer virtuellen dreidimensionalen Abbildung der Körperhälften wird vorzugsweise ein 3-D-Body-Scanner verwendet. Vorzugsweise wird ein Body-Scanner mit mindestens drei Säulen verwendet und ein dreidimensionaler Vollscann des Abschnitts des Körpers erstellt. Der Vollscann dient nicht dem berührungslosen Maßnehmen der Person, sondern wird unmittelbar in eine Konstruktion eines oder mehrerer Kleidungsstücke einbezogen. Von besonderem Vorteil des erfindungsgemäßen Verfahrens ist, dass die Abbildung tatsächlich von derjenigen Person erstellt wird, für die ein individueller Bekleidungsschnitt erstellt werden soll.

Das Scannen der Person ist in einer natürlichen Körperhaltung durchzuführen. Durch einen sogenannten Vorscann kann eine unnatürliche oder angespannte Körperhaltung erkannt werden.

Die abgebildeten Abschnitte des Körpers sind vorzugsweise solche, für die einzelne Kleidungsstücke angefertigt werden können, z. B. die Beine, der Oberkörper oder der Kopf. Die Abbildung betrifft in einer einfachen Ausführung des erfindungsgemäßen Verfahrens die Konturen der Oberfläche des Körpers.

Das Element kann in Gänze oder teilweise unmittelbar an die Oberfläche des Körpers oder mit einem gewählten Abstand zur Oberfläche angepasst werden. Die Beschreibung ist so zu verstehen, dass statt eines Elements auch eine Anzahl von Elementen erzeugt, angepasst und übertragen werden können.

Es ist möglich, dass das Element eine Raumform in Form einer fest umrissenen, dreidimensionale Fläche ist. Es kann auch durch eine oder mehrere Punktwolken oder räumlich verteilt angeordnete andere Zeichen gegeben sein. Ein nur in einer Ebene liegendes Element wird im Sinne der Beschreibung als Sonderform einer dreidimensionalen Fläche verstanden.

Die Symmetrieachse wird als eine Achse festgelegt (Schritt a.a), bezüglich derer theoretisch eine Symmetrie vorliegt. Beispielsweise wird bezüglich einer medial durch den Körper verlaufenden Achse eine Symmetrie erwartet. Ob bezüglich der so festgelegten Symmetrieachse tatsächlich eine Symmetrie vorliegt, wird im Schritt a.b geprüft. Dabei können beispielsweise paarweise Differenzen von Abständen zweier oder mehrer Punkte zur Symmetrieachse für die Überprüfung verwendet werden, wobei sich die Differenzen nicht mehr als einen erlaubten Toleranzbetrag unterscheiden dürfen. Anderenfalls liegt eine Asymmetrie der Körperhälften bezüglich der Symmetrieachse vor. Im Übrigen sind auch andere bekannte Verfahren für die Überprüfung des Vorliegens einer Symmetrie anwendbar. Die Symmetrieachse kann manuell oder automatisch, z. B. entlang einer vordefinierten Linie der Abbildung oder unter Nutzung eines mathematischen Algorithmus festgelegt werden.

Wird eine Asymmetrie festgestellt, liegt also keine Symmetrie vor, ist es vorteilhaft, wenn die Schritte a bis a.b wiederholt werden. Dies dient der Verifizierung der festgestellten Asymmetrie. Eine Wiederholung der Schritte a bis a.b ist in weiteren Ausführungen des Verfahrens auch bei Vorliegen einer Symmetrie möglich.

In Schritt b. wird vorzugsweise eine Entscheidung getroffen, die dahin geht, dass bei dem Vorliegen einer Symmetrie das Element für eine Körperhälfte erzeugt, angepasst und zugeordnet wird und das angepasste Element gespiegelt und das gespiegelte Element ebenfalls einem Bekleidungsschnitt zugeordnet wird. Es ist ein zweilagiger Zuschnitt möglich. Alternativ wird bei einem Nicht-Vorliegen einer Symmetrie das Element für jede Körperhälfte getrennt erzeugt, angepasst und zugeordnet. Der Zuschnitt erfolgt dann einlagig. Liegt eine Symmetrie vor, brauchen nur Elemente für eine Körperhälfte erzeugt, angepasst und übertragen zu werden, wodurch die Erstellung des Bekleidungsschnitts effizienter möglich ist. Die Spiegelung des Elements kann während oder nach der Anpassung des Elements erfolgen.

Es ist eine vorteilhafte Ausführung des erfindungsgemäßen Verfahrens, wenn die Symmetrieachse aus Achsabschnitten zusammengesetzt ist und das Vorliegen einer Symmetrie der abgebildeten Körperhälften bezüglich des jeweiligen Achsabschnitts geprüft wird. Dabei stimmen die Achsabschnitte vorzugsweise mit Abschnitten des Körpers überein. So können beispielsweise ein erster Achsabschnitt von den Füßen bis zur Hüfte und ein zweiter Achsabschnitt von der Hüfte bis zum Scheitel reichen. Vorteilhaft ist, dass die Achsabschnitte nicht zueinander fluchten noch parallel zueinander sein müssen. Dadurch kann beispielsweise eine gegenüber den Beinen und der Hüfte abknickende Haltung des Oberkörpers berücksichtigt werden. Die Schritte b. und c. können dann für jeden Achsabschnitt einzeln durchgeführt werden.

Um Schnittlinien eines Bekleidungsschnitts eines Kleidungsstücks zu erstellen, können durch einen Bediener einer Konstruktionssoftware Schnittebenen durch den Körper festgelegt werden. So kann eine Schnittebene vorzugsweise in Höhe der Taille liegen. Weitere Schnittebenen können in Höhe der Knie, der Brust oder der Schultern liegen. Außerdem können durch den Bediener weitere Linien, Punkte, Markierungen oder ähnliche Informationen in die Abbildung eingetragen werden. Punkte verschiedener Schnittebenen können zu Schnittlinien verbunden werden. So kann eine die Seitennaht darstellende Schnittlinie durch Punkte der Querschnitte auf Höhe der Taille, der Knie, der Waden und der Knöchel bestimmt sein. Es können Schnittebenen als Referenzebenen festgelegt sein.

In einer bevorzugten Ausführung des erfindungsgemäßen Verfahrens wird mindestens ein Querschnitt durch die Abbildung entlang mindestens einer vertikalen und/oder einer horizontalen Referenzebene festgelegt. Ausgehend von dem Querschnitt wird mindestens ein Punkt einer Kurve festgelegt, durch die mindestens eine Begrenzung mindestens eines Elements gegeben ist. Beispielsweise kann ein Querschnitt durch eine horizontale Referenzebene in Höhe der Taille festgelegt sein. Eine weitere Referenzebene kann als eine vertikale, sich medial und dorso-ventral der Abbildung erstreckende, Referenzebene der gesamten Struktur des Aufbaus des aus Elementen zusammengesetzten Kleidungsstücks festgelegt werden. Die Symmetrieachse liegt vorzugsweise in der vertikalen Referenzebene. In dem durch die horizontale Referenzebene festgelegten Querschnitt können beispielsweise diejenigen Punkte einer den Querschnitt umgrenzenden Kurve festgelegt werden, die jeweils am weitesten von der vertikalen Referenzebene entfernt sind. Es ist in weiteren Ausführungen des erfindungsgemäßen Verfahrens auch möglich, den Punkt in einem gewählten Abstand zu der den Querschnitt umgrenzenden Kurve oder innerhalb des Querschnitts festzulegen. Dadurch können beispielsweise Zuschläge zur Gewährleistung der Bequemlichkeit oder ein besonders eng anliegender Sitz des Kleidungsstücks vorgesehen werden.

Vorzugsweise wird ausgehend von einem weiteren Querschnitt, beispielsweise auf der Höhe der Knöchel, ebenfalls mindestens ein Punkt festgelegt. Die Punkte werden durch eine Kurve miteinander verbunden. Die Kurve begrenzt mindestens ein Element auf mindestens einer seiner Seiten. Es können auch mehrere Punkte ausgehend von einem oder von mehreren Querschnitten festgelegt werden. Durch einige oder alle Punkte kann in einer bevorzugten Ausführung des erfindungsgemäßen Verfahrens mindestens eine Hilfsebene festgelegt sein. Diese Hilfsebene kann sich entweder vertikal, horizontal oder unter einem anderen beliebigen Winkel zu der oder den Referenzebene(n) erstrecken. Die Ausrichtung der mindestens einen Hilfsebene wird dabei von der individuellen Körperform und Körperhaltung der realen Person bestimmt. Die Hilfsebene kann aus mehreren Abschnitten bestehen, die unter einem Winkel zueinander stehen. Beispielsweise kann ein erster Abschnitt von den Knöcheln bis zur Taille reichen und die tatsächliche Stellung der Beine in der Hilfsebene abbilden. Ein zweiter Abschnitt kann, beispielsweise, von der Taille bis zur Brust und ein dritter Abschnitt von der Brust bis zu den Schultern reichen. Durch diese Abschnitte der Hilfsebene kann die individuelle Körperhaltung abgebildet werden.

Die durch die horizontalen und vertikalen Querschnitte der Abbildung entstandene Kurven (Konturumrisskurven) ermöglichen es, die Querschnitte als einzelne geometrische Elemente, die von Konturumrisskurven umgrenzt sind, aus der Abbildung zu generieren und in ein Koordinatensystem der Konstruktionssoftware zu implementieren. So kann eine Bezugslinie die tatsächliche Taillenlinie der Person zeigen und damit die horizontale Referenzebene der gesamten Struktur des aus Elementen zusammengesetzten Kleidungsstücks darstellen. Weitere horizontale Schnittebenen und entsprechende Querschnitte sind beispielsweise in Höhe der Schnittstelle zwischen Hals und Schultern, in Höhe an der ventral höchsten Stelle der Brust, an der breitesten Stelle im Bereich der Hüften, in Höhe der Waden, in Höhe der Knöchel, der Schnittstelle im Bereich des Schritts, in Höhe der Oberarme, in Höhe der Unterarme und in Höhe der Handgelenke möglich.

Die Bezugslinie kann anhand eines an dem Körper angebrachten und ortstreu abgebildeten Markierungsmittels, z. B. eines Gürtels oder eines reflektierenden Bandes, festgelegt werden. Ausgehend von dieser Bezugslinie wird mindestens ein Maß des Elements ermittelt. Von großem Vorteil ist dabei, dass die Person die Lage der Bezugslinie selbst festlegen kann.

Als Bezugslinie eignet sich insbesondere die relative Lage der Taille in der Abbildung. Die Festlegung der Taille ist für die Herstellung vieler Kleidungsstücke ein zentraler Schritt. Allerdings ist es in der Praxis oft ein Problem, die Taille einer Person genau festzulegen. Insbesondere bei übergewichtigen Menschen ist die Lage der Taille nicht immer eindeutig festzustellen. Außerdem haben verschiedene Personen oft unterschiedliche Ansichten darüber, wo sie die Taille in ihren Kleidungsstücken vorgesehen haben möchten. Eine Festlegung, z. B. der Taille, mittels eines Markierungsmittels erlaubt es, auch die individuellen Tragegewohnheiten von Kleidungsstücken durch die jeweilige Person zu berücksichtigen.

Falls eine Asymmetrie der Körperhälften bezüglich der Symmetrieachse vorliegt, sind die horizontalen Schnittebenen im Winkel von 90° zur Symmetrieachse des jeweiligen Abschnitts festzulegen. Die Lagen der Schnittebenen für seitliche (z. B. mediolaterale) und frontale (z. B. dorso-ventrale) Querschnitte der Abbildung werden graphisch ermittelt.

Die erzeugten Elemente werden aus ihrer dreidimensionalen Form in den zweidimensionalen Bekleidungsschnitt abgewickelt. Dabei können den Elementen zugeordnete Markierungen, z. B. mittels eines Programms durch eine Person eingezeichnete Linien, Punkte, Punktwolken oder Hinweise zum Fadenlauf, mit in den Schnitt übertragen werden. Die Elemente können in dem Schnitt veränderbar, z. B. mittels des Programms bearbeitbar, sein. So können erforderliche Zuschläge, z. B. Bequemlichkeitszuschläge und Abnäher, zu den Abmaßen des Elements eingefügt werden. Es können auch zusätzliche Elemente in den Bekleidungsschnitt eingefügt werden, die nicht vorher an die Abbildung angepasst wurden.

Der Fadenlauf, der den Verlauf des Längsfadens eines Stoffs entspricht, sollte immer vertikal verlaufen, um ungewollte Faltenbildung des Stoffes zu vermeiden. Insbesondere bei festgestellten Asymmetrien der Körperhälften ist der Fadenlauf individuell festzulegen.

Sehr günstig ist es, wenn der Bekleidungsschnitt wieder in die Abbildung überführt (aufgewickelt) wird, so dass eine virtuelle Anprobe möglich ist. Dies kann beispielsweise nach Veränderungen des Elements in dem Bekleidungsschnitt erforderlich sein. Es ist vorteilhaft, dass die Person, für die das Kleidungsstück angefertigt werden soll, nicht zu einer erneuten Anprobe gebeten werden braucht. Bei entsprechender programmtechnischer Ausgestaltung ist es auch möglich, die Abbildung beliebig zu drehen, so dass das Element oder das Kleidungsstück von allen Seiten betrachtet werden kann.

Die einzelnen Schritte des Verfahrens können durch Programme unterstützt werden, die jeweils einzelnen, mehreren oder allen Schritten zugeordnet sind.

Die Erfindung wird nachfolgend anhand von Abbildungen und Ausführungsbeispielen näher erläutert. Es zeigen dabei:
- Fig. 1: eine schematische Darstellung einer Abbildung einer realen Person, deren Körperhälften bezüglich einer Symmetrieachse symmetrisch sind;
- Fig. 2: eine schematische Darstellung einer Abbildung einer realen Person, deren Körperhälften bezüglich einer Symmetrieachse asymmetrisch sind;
- Fig. 3: eine schematische Darstellung von Referenzebenen und Hilfsebenen in einer Abbildung eines Abschnitts des Körpers einer realen Person,
- Fig. 4: eine schematische Darstellung eines Abschnitts des Körpers einer realen Person mit angepassten Elementen;
- Fig. 5: eine schematische Darstellung von Elementen, die einem Bekleidungsschnitt zugeordnet sind sowie im Bekleidungsschnitt vorgenommene Veränderungen der Elemente.

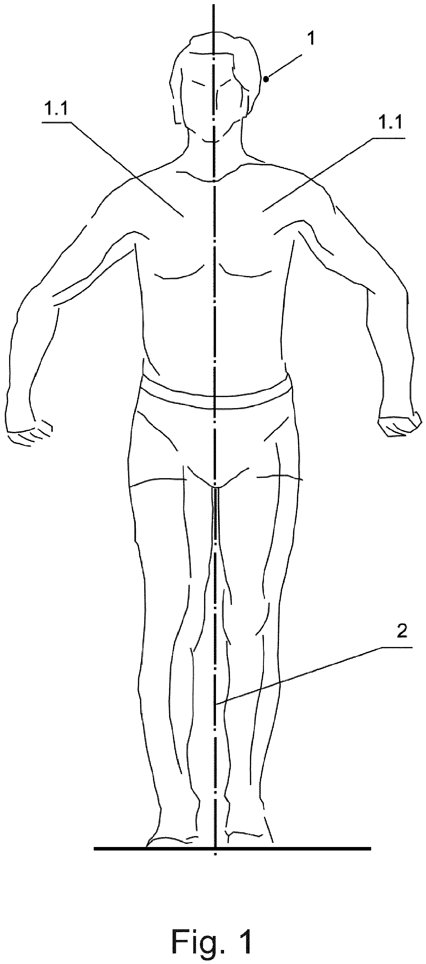

In Fig. 1 ist eine mittels eines Body-Scanners erstellte und mittels eines Rechners bearbeitbare und auf einer Anzeige dargestellte Abbildung eines Körpers 1 einer realen Person gezeigt. Der Körper 1 ist durch seine dargestellte Oberfläche abgebildet und mittels einer automatisch durch eine Programmkomponente einer Konstruktionssoftware festgelegten, median verlaufenden, Symmetrieachse 2 in Körperhälften 1.1 unterteilt. Bezüglich der Symmetrieachse 2 wird mittels der Konstruktionssoftware das Vorliegen einer Symmetrie der Körperhälften 1.1 geprüft. Das Ergebnis der Überprüfung, das festgestellte Vorliegen einer Symmetrie der Körperhälften 1.1, wird einem Bediener des Rechners auf einer Anzeige angezeigt.

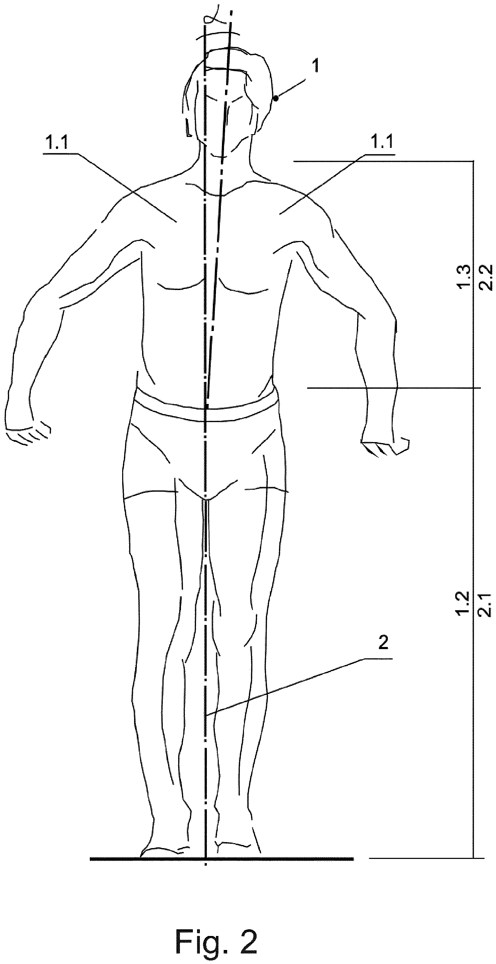

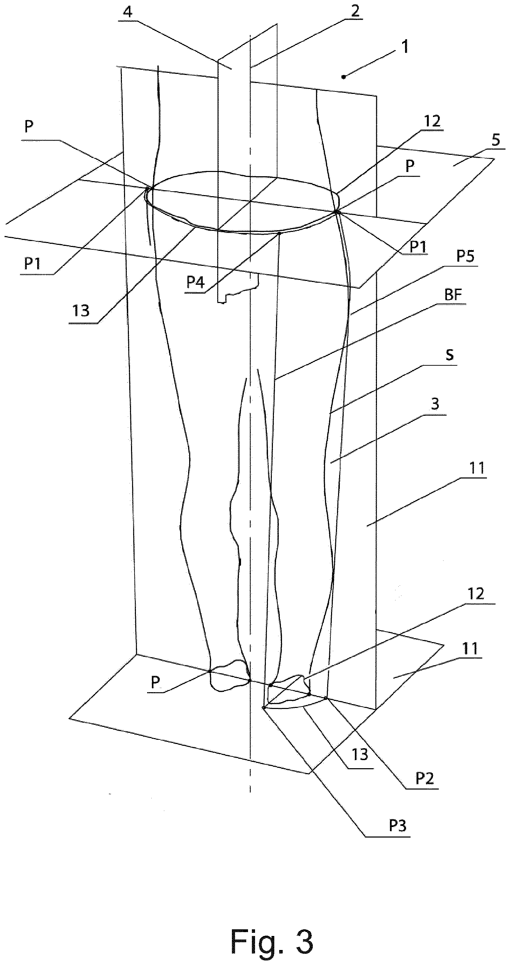

In Fig. 2 ist ein Körper 1 einer realen Person gezeigt, deren Körperhälften 1.1 bezüglich der Symmetrieachse 2 asymmetrisch sind. Dabei ist ein erster Abschnitt 1.2 von den Füßen bis zur Hüfte symmetrisch, während ein zweiter Abschnitt 1.3, der dem Oberkörper entspricht, bezüglich der Symmetrieachse 2 asymmetrisch ist. Wird bei der Durchführung des erfindungsgemäßen Verfahrens eine Asymmetrie festgestellt, werden die Schritte der Festlegung der Symmetrieachse 2 und die Überprüfung auf Vorliegen einer Symmetrie einmal wiederholt. Entspricht das Ergebnis der wiederholten Überprüfung der ersten Überprüfung, gilt die festgestellte Asymmetrie als bestätigt. Die Symmetrieachse 2 wird anhand der zur Überprüfung benutzten Daten in Achsabschnitte unterteilt. Ein erster Achsabschnitt 2.1 reicht von den Füßen bis zur Hüfte, während ein zweiter Achsabschnitt 2.2 von der Hüfte bis zum Hals reicht. Der zweite Achsabschnitt 2.2 ist gegenüber dem ersten Achsabschnitt 2.1 um einen Winkel α geneigt. Ist eine solche Unterteilung der Symmetrieachse 2 möglich, kann für den bis zur Hüfte reichenden ersten Achsabschnitt 2.1 entschieden werden, Elemente 3 (siehe Fig. 3) an nur eine Körperhälfte 1.1 anzupassen, während für den von der Hüfte bis zum Hals reichenden zweiten Achsabschnitt 2.2 entschieden wird, alle Elemente 3 individuell anzupassen.

Anhand der Fig. 3 soll die prinzipielle Vorgehensweise bei der Konstruktion von Schnittlinien und Elementen 3 einer Hose beschrieben werden. Gezeigt ist eine Abbildung eines Körpers 1 etwa von der Höhe der Knöchel bis zur Mitte des Oberkörpers. Auf Höhe der Taille ist ein Querschnitt der Abbildung durch eine horizontale Schnittebene als horizontale Referenzebene 5 festgelegt. Eine vertikale Referenzebene 4 erstreckt sich medial der Abbildung und in dorso-ventraler Richtung. Der Querschnitt ist von einer Konturumrisskurve 12 umgrenzt. Ausgehend von dem Querschnitt wird auf jeder Seite der vertikalen Referenzebene 4 in der horizontalen Referenzebene 5 ein Punkt P der Konturumrisskurve 12 gesucht, der jeweils am weitesten von der vertikalen Referenzebene 4 entfernt liegt. Um eine gewünschte Bequemlichkeit der Hose zu gewährleisten, wird jeweils ein weiterer Punkt P1 bestimmt, der außerhalb des Querschnitts liegt. Jeder der Punkte P 1 ist ein Ende einer manuell festgelegten Konstruktionskurve 13. Die Konstruktionskurve 13 liegt ebenfalls in der horizontalen Referenzebene 5, weist in ventraler Richtung eine etwa halbovale Form auf und ist von einer senkrecht auf der vertikalen Referenzebene 4 stehenden und durch die Symmetrieachse 2 verlaufenden Gerade begrenzt.

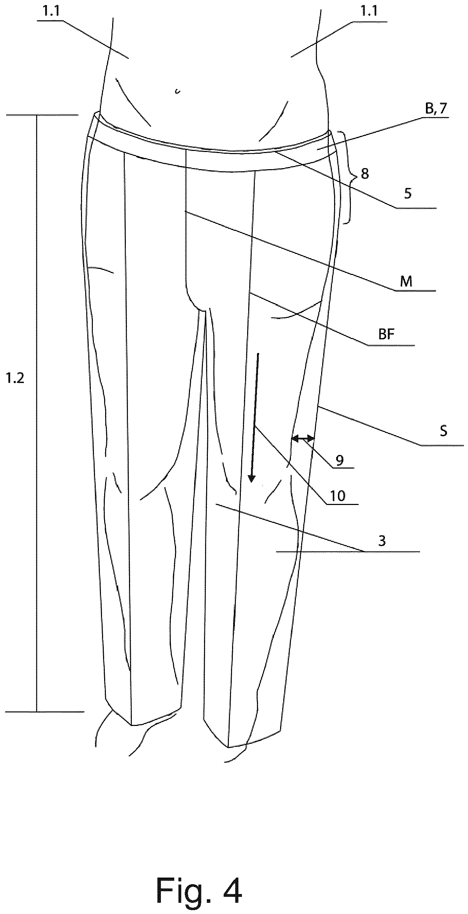

Auf der Höhe der Knöchel wird eine sich horizontal erstreckende Hilfsebene 11 festgelegt. Durch die beiden Knöchel sind in der horizontalen Hilfsebene 11 zwei Querschnitte festgelegt. Ausgehend von diesen Querschnitten werden, wie oben prinzipiell beschrieben, jeweils ein Punkt P2 manuell bestimmt (nur für eine Seite gezeigt). Durch die in der horizontalen Referenzebene 5 liegenden Punkte P1 sowie durch die in der horizontalen Hilfsebene 11 liegenden Punkte P2 wird eine sich vertikal erstreckende Hilfsebene 11 bestimmt. Die vertikale Hilfsebene 11 ist zu der vertikalen Referenzebene 4 und zu der horizontalen Referenzebene 5 um je einen Winkel (nicht gezeigt) geneigt, der von der tatsächlichen Körperhaltung der Person abhängt. Die auf den Konstruktionskurven 13 liegenden Punkte P1 und P2 werden auf jeder Seite der vertikalen Referenzebene 4 miteinander durch eine Gerade als Schnittlinie verbunden. Diese Schnittlinie ist die Seitenlinie S. Die Seitenlinie S verläuft in der vertikalen Hilfsebene 11 und verläuft auf der Oberfläche des Körpers 1. Manuell kann der Verlauf der Seitenlinie S angepasst werden. So ist auf Höhe der Hüfte ein Punkt P5 manuell festgelegt, durch den die Seitenlinie S verläuft. Der Punkt P5 auf Höhe der Hüfte führt zu einem leicht auswärts, von dem Körper 1 weg, gerichtetem Verlauf der Seitenlinie S zwischen Taille und Hüfte und zu einem leicht einwärts gerichteten Verlauf zwischen Hüfte und Knöchel (zu übersichtlicheren Darstellung in Fig. 4 gezeigt). Diese Schnittlinie kann als modifizierte Seitenlinie S angesehen werden.

In der horizontalen Hilfsebene 11 wird, wie oben beschrieben, ausgehend von dem jeweiligen Querschnitt in Höhe der Knöchel und der jeweiligen Konturumrisskurve 12 der auf Höhe der Knöchel ebenfalls je eine Konstruktionskurve 13 festgelegt. Diese reicht jeweils von dem Punkt P2 bis zu einem weiteren Punkt P3 in der horizontalen Hilfsebene 11. Auf der Konstruktionskurve 13 in der horizontalen Referenzebene 5 ist je ein Punkt P4 festgelegt, der sich vertikal über dem Punkt P3 befindet. Durch die Seitenlinie S, die Konstruktionskurve 13 in der horizontalen Hilfsebene 11, eine zwischen den Punkten P3 und P4 verlaufenden Schnittlinie sowie durch den Abschnitt der Konstruktionskurve 13 zischen den Punkten P1 und P4 in der horizontalen Referenzebene 5 ist ein Element 3 umgrenzt. Die Schnittlinie zwischen den Punkten P3 und P4 ist die Bügelfalte BF.

In einer weiteren Ausführung des Verfahrens können weitere Querschnitte und Punkte P festgelegt sein. So können auf der Höhe der Hüfte, der Knie und / oder der Waden Querschnitte festgelegt werden. Die Elemente sind dann entsprechend kleiner und teils oder völlig von anderen Schnittlinien umgrenzt.

Die Punkte P der Konstruktionskurve 13 können auf der Konturumrisskurve 12 oder innerhalb eines Querschnitts festgelegt sein. Die Seitenlinie S folgt dann der Oberfläche des Körpers 1 (wie in Fig. 3 angedeutet) oder liegt innerhalb des Körpers 1. Insbesondere letztere Ausführung führt zur Konstruktion von Kleidungsstücken, die beim Tragen durch den Körper 1 gedehnt werden müssen.

Nicht gezeigt ist die Ermittlung von Seitenlinien S oberhalb der horizontalen Referenzebene 5. Es wird das oben beschriebene Vorgehen entsprechend angewendet. Die Hilfsebenen 11 werden manuell und aufgrund visueller Bewertung festzulegen.

Die Lage der Schulterlinie des Kleidungsstücks wird durch den Punkt P1 eines Querschnitts in Höhe des Halsansatzes sowie durch den Punkt P1 eines Querschnitts in Höhe des Schultergelenks bestimmt.

Die in Fig. 4 dargestellte Abbildung zeigt die Körperhälften 1.1 von den Füßen bis etwa zur Hälfte des Oberkörpers. Die Beine sind bis zur Hüfte als der erste Abschnitt 1.2 festgelegt, an den mindestens ein virtuell erzeugtes Element 3 angepasst wird.

Die Lage der horizontalen Referenzebene 5 in Höhe der Taille ist durch ein an der realen Person befestigten, von der Person selbst angelegten und ortstreu abgebildeten Gürtel als Markierungsmittel 7 bestimmt. Ausgehend von der durch das Markierungsmittel 7 bestimmten horizontalen Schnittebene 5 in Höhe der Taille (Taillenlinie) werden, wie zu Fig. 3 erläutert, durch einen Bediener der Konstruktionssoftware weitere Punkte P der vorstehend genannten und/oder von weiteren Schnittlinien festgelegt.

Die horizontalen Schnittebenen 5 in Höhe der Taille und der Hüfte bestimmen wesentlich den Sitz der Hose, da der Bereich von Taille bis zur Hüfte eine tragende Fläche 8 ist. Weiterhin wird eine Mittelnaht M, ein Bund B der Hose und jeweils eine Bügelfalte BF und die Seitenlinien S festgelegt. Diese Schnittlinien begrenzen die Elemente 3 (nur zwei davon beispielhaft bezeichnet), die in ihrer Gesamtheit die Hose darstellen.

Durch die Gesamtheit von Schnittlinien ist ein individuell an den Abschnitt 1.2 angepasstes Kleidungsstück konstruiert worden.

Es ist zu beachten, dass auf bestimmten Körperteilen die Kleidung enger am Körper 1 anliegt und an anderen Körperteilen weiter ist oder überhaupt nicht anliegt. Eng anliegende Bereiche sind tragende Flächen 8 des Körpers 1. Dazu gehören auch die Schulterlinie, die Schulterblätter und die Fläche zwischen Hals und Brust für Kleidungsstücke wie Sakko, Hemd oder Kleid. Für Bunderzeugnisse wie Hose oder Rock sind die tragenden Flächen 8 die Taille und das Hüftenoberteil. Zwischen der Kleidung und denjenigen Körperteilen, die nicht zu den tragenden Flächen 8 gehören, ist ein Freiraum vorhanden. Dieser ist notwendig, um den Körper 1 eine Bewegungsfreiheit beim Tragen des Kleidungsstücks zu gewähren und um dem Kleidungsstück seine Form zu geben. Das ist die sogenannten Zugabe für die Bequemlichkeit (Bequemlichkeitszugabe 9). Die tragenden Flächen 8, die Bequemlichkeitszugabe 9 sowie deren Wechselwirkungen und Veränderungen bei verschiedenen Bewegungszuständen des Körpers 1 sind bei der Festlegung der Schnittlinien genau zu berücksichtigen.

Wurde das Vorliegen einer Symmetrie festgestellt, wird das Element 3 erzeugt und nur für eine Körperhälfte 1.1 angepasst. Mittels der Konstruktionssoftware wird das Element 3 gespiegelt und in der Abbildung auch in der entsprechenden Positionierung für die andere Körperhälfte 1.1 angezeigt. Eine Anpassung oder Korrektur des Elements 3 der anderen Körperhälfte 1.1 ist zwar möglich, aber nicht zwingend erforderlich. Im Falle einer festgestellten Asymmetrie werden die Elemente 3 für beide Körperhälften 1.1 angepasst. Es ist möglich, den Abschnitt 1.2 von allen Seiten zu betrachten und gegebenenfalls Korrekturen an der Passform vorzunehmen. In dieser Phase des Verfahrens ist es notwendig, für jedes Element 3 die jeweilige Richtung des Fadenlaufs 10 (verallgemeinernd durch einen Pfeil symbolisiert) zu bestimmen.

Sind alle Elemente 3 erzeugt und angepasst, werden die Elemente 3 nach einer abschließenden visuellen Kontrolle durch den Bediener mittels der Konstruktionssoftware abgewickelt und einem Bekleidungsschnitt zugeordnet.

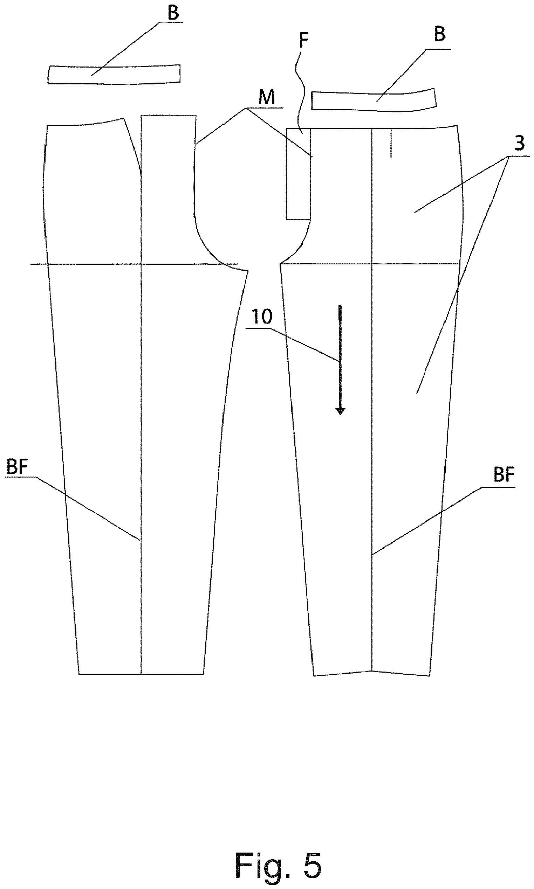

Solch ein Bekleidungsschnitt ist in Fig. 5 vereinfacht gezeigt. Neben den abgewickelten und zugeordneten Elementen 3 (nur zwei davon bezeichnet) ist eine Fläche F gezeigt, die durch den Bediener erstellt wurde und ein überlappender Bereich zwischen Elementen 3 ist. Bei der Überlappung von Elementen 3 oder von Teilen dieser, kann eine Dehnung eines Stoffs des Kleidungsstücks, z. B. durch bekannte Wärmebehandlungsverfahren, vorgesehen werden. Bei einem vorzusehenden Abnäher ist die Länge des Stoffs zu verkleinern. Veränderungen der Elemente 3 in dem Bekleidungsschnitt erfolgen unter Berücksichtigung der Eigenschaften eines später für das Kleidungsstück verwendeten Kleidungsstoffs. Der Bekleidungsschnitt lässt außerdem den Bund B, die Mittelnaht M, die Bügelfalten BF und den Fadenlauf 10 erkennen.

Das Ergebnis des erfindungsgemäßen Verfahrens ist ein Bekleidungsschnitt, in dem alle individuellen Besonderheiten des abgebildeten Abschnitts 1.2 der Person wie Körperhaltung, Proportionen und Symmetrie der Körperhälften 1.1, berücksichtigt sind.

Die in dem Bekleidungsschnitt enthaltenen Elemente 3 und die Fläche F können jederzeit wieder aufgewickelt und an dem Abschnitt 1.2 des Körpers 1 gezeigt werden. Dadurch ist eine virtuelle Anprobe des so konstruierten Kleidungsstücks möglich. Auch ist ein Versenden des Schnitts als Datei(-kopie), beispielsweise an eine Fertigungsstelle oder ein anderes Atelier ermöglicht. Zudem können gleichzeitig oder nacheinander Veränderungen unabhängig voneinander an dem Schnitt oder einer seiner Datei(-kopien) vorgenommen werden.

### Bezugszeichenliste

- 1: Körper
- 1.1: Körperhälften
- 1.2: erster Abschnitt
- 1.3: zweiter Abschnitt
- 2: Symmetrieachse
- 2.1: erster Achsabschnitt
- 2.2: zweiter Achsabschnitt
- 3: Element
- 4: vertikale Referenzebene
- 5: horizontale Referenzebene
- 6: Bezugslinie
- 7: Markierungsmittel
- 8: tragende Fläche
- 9: Bequemlichkeitszugabe
- 10: Fadenlauf
- 11: Hilfsebene
- 12: Konturumrisskurve
- 13: Konstruktionskurve
- α: Winkel (zwischen Symmetrieachse 2 und zweitem Achsabschnitt 2.2)
- P, P1 bis P5: Punkt
- S: Seitenlinie
- M: Mittelnaht
- B: Bund
- BF: Bügelfalte
- F: Fläche

## Patentansprüche

1. Verfahren zur Erstellung eines Bekleidungsschnitts umfassend die Schritte:
a. Erstellen einer virtuellen dreidimensionalen Abbildung der Körperhälften (1.1) mindestens eines Abschnittes (1.2, 1.3) eines Körpers (1) einer Person;
b. Erzeugen von virtuellen Koordinaten zur Simulation eines Kleidungsstücks;
c. Zuordnen von relativen Maßen des simulierten Kleidungsstücks zu einer zweidimensionalen Darstellung,
**dadurch gekennzeichnet,**
- **dass** in Schritt a. eine virtuelle dreidimensionale Abbildung der Körperhälften (1.1) einer realen Person erstellt wird, um für diese reale Person einen individuellen Bekleidungsschnitt zu erstellen;
- **dass** nach Schritt a. die folgenden Schritte ausgeführt werden:
- a.a Festlegen einer Symmetrieachse (2) der abgebildeten Körperhälften (1.1);
- a.b Überprüfen des Vorliegens einer Symmetrie der abgebildeten Körperhälften (1.1) bezüglich der Symmetrieachse (2);
- **dass** in Schritt b. mittels der virtuellen Koordinaten mindestens ein virtuelles Element (3) eines Kleidungsstücks erzeugt wird;
- **dass** in Schritt b. das Element (3) an einen Bereich der Abbildung angepasst wird;
- **dass** in Schritt b. anhand eines Ergebnisses der Überprüfung entschieden wird, ob das Element (3) an den Bereich der Abbildung nur einer oder beider Körperhälften (1.1) angepasst wird,
- **dass** in Schritt c. das Element (3) abgewickelt wird, um einen zweidimensionalen Bekleidungsschnitt zu generieren und
- **dass** das Element (3) in dem Bekleidungsschnitt gezielt verändert werden kann.

2. Verfahren nach Anspruch 1, **dadurch gekennzeichnet, dass** die Schritte a bis a.b wiederholt werden, wenn keine Symmetrie vorliegt.

3. Verfahren nach Anspruch 1 oder 2, **dadurch gekennzeichnet, dass** bei dem Vorliegen einer Symmetrie Elemente (3) für eine Körperhälfte (1.1) erzeugt, angepasst und übertragen werden und die angepassten Elemente (3) gespiegelt und die gespiegelten Elemente (3) ebenfalls in einen Bekleidungsschnitt übertragen werden oder bei einem Nicht-Vorliegen einer Symmetrie Elemente (3) für jede Körperhälfte (1.1) getrennt erzeugt, angepasst und zugeordnet werden.

4. Verfahren nach einem der vorhergehenden Ansprüche, **dadurch gekennzeichnet, dass** die Symmetrieachse (2) aus Achsabschnitten (2.1, 2.2) zusammengesetzt ist und das Vorliegen einer Symmetrie der abgebildeten Körperhälften (1.1) bezüglich des jeweiligen Achsabschnitts (2.1, 2.2) geprüft wird.

5. Verfahren nach Anspruch 4, **dadurch gekennzeichnet, dass** die Schritte b und c für jeden Achsabschnitt (2.1, 2.2) durchgeführt werden.

6. Verfahren nach einem der vorhergehenden Ansprüche, **dadurch gekennzeichnet, dass** mindestens ein Querschnitt durch die Abbildung entlang mindestens einer vertikalen und/oder einer horizontalen Referenzebene (4, 5) festgelegt wird und ausgehend von dem Querschnitt mindestens ein Punkt (P) einer Kurve festgelegt wird, durch die mindestens eine Begrenzung mindestens eines Elements (3) gegeben ist.

7. Verfahren nach einem der vorhergehenden Ansprüche, **dadurch gekennzeichnet, dass** in der Abbildung eine Bezugslinie (6) festgelegt wird.

8. Verfahren nach Anspruch 7, **dadurch gekennzeichnet, dass** die Bezugslinie (6) anhand eines an dem Körper (1) angebrachten und ortstreu abgebildeten Markierungsmittels (7) festgelegt wird.

9. Verfahren nach einem der vorhergehenden Ansprüche, **dadurch gekennzeichnet, dass** die Elemente (3) des Bekleidungsschnitts wieder in die Abbildung überführt werden, so dass eine virtuelle Anprobe des Elements (3) möglich ist.
